# EUROPEAN PATENT APPLICATION

(11) **EP 4 349 146 A1**
(43) Date of publication of application: **10.04.2024**
(21) Application number: 23195029.6
(22) Date of filing: 04.09.2023
(51) Int. Cl.: A01B 59/043, A01B 59/06

(54) **MOBILE MACHINE WITH THREE-POINT HITCH**

(30) Priority: 07.10.2022 GB 202214749
(71) Applicant: AGCO International GmbH, 8212 Neuhausen am Rheinfall (CH)
(72) Inventor: BRACK, Roland, 87616 Marktoberdorf (DE)
(74) Representative: AGCO Intellectual Property Department

(57) **Abstract**

A mobile machine has a three-point hitch comprising a pair of lower links and an upper link. The upper link is mounted to an upper link support bracket (40) and a respective double acting fluid actuator (50) is connected to each of the lower links for raising and lowering the lower links. A fluid system for actuating the actuators includes a lower link actuator control valve (60) having a lift port fluidly connected with lift chambers of the lower link actuators by a lift chamber fluid line and a down port fluidly connected with down chambers of the lower link actuators by a down chamber fluid line. At least one, and preferably both, of the lift chamber fluid line and the down chamber fluid line includes a fluid passage (80) extending through the upper link support bracket.

## Description

### FIELD

Embodiments of the present invention relate generally to a mobile machine, such as an agricultural tractor or other agricultural vehicle, having a three-point hitch for attaching an implement. The invention further relates to an upper link support bracket for use in a three-point hitch of such a mobile machine.

### BACKGROUND

Three-point hitches for attaching an implement are standard at the rear of agricultural tractors and other mobile machines. A three-point hitch comprises a central upper link and a pair of lower links laterally spaced apart either side of the upper link. All the links are pivotally mounted at an inner end on a chassis (or other structural element) of the mobile machine. Each of the lower links typically has a lifting rod connected with a lower link actuator which is used to pivot the lower link relative to the chassis and hence raise and lower any implement connected with the lower links. Lower link actuators are generally double acting fluid cylinders, each having a lift chamber and down chamber. Where the fluid pressure in the lift chambers is higher than the fluid pressure in the down chambers the lower links are raised and where the fluid pressure in the down chambers is higher than the fluid pressure in the lift chambers the lower links are lowered.

Because the lower links are operated in unison, operation of the two lower link actuators is often controlled though a single lower link actuator control valve having two working ports for connection with chambers of both lower link actuators. A first working port, which can be referred to a lift port, is connected to the lift chambers and a second working port, which can be referred to as a down port, is connected to the down chambers. When the lower links are to be moved, the lower link actuator control valve is operative to connect one of the working ports to a supply of pressurised fluid and the other to atmosphere depending on whether the links are being raised or lowered. In the case of a hydraulic system, the connection to atmosphere is generally made to a tank or reservoir. The fluid line from each working port may be split by means of a T coupling for connection to the corresponding chambers of the two lower link actuators. Generally, fluid lines are connected to each other or to other fluid components via screw fittings including sealing rings. As these may get loose due to shocks or oscillation, fluid lines must be fixed to the chassis or some other component via hose clamps or clips which means further efforts. Especially when T couplings are used, fixation should be provided close to the T coupling.

In other known hitch arrangements, the lower link actuators are single acting, each having a single working chamber. In this case, the lower link actuator control valve has a single working port fluidly connected to the working chambers of the two actuators through a single working chamber fluid line.

### BRIEF SUMMARY

In an aspect of the invention, there is provided a mobile machine having a three-point hitch comprising a pair of lower links and an upper link, the upper link being pivotably mounted to an upper link support bracket, a respective lower link actuator operatively connected with each of the lower links for raising and lowering the lower links, each lower link actuator comprising a fluid actuator having at least one working chamber, a fluid system for actuating the lower link actuators, the fluid system comprising a lower link actuator control valve having at least one working port fluidly connected with the at least one working chamber of each of the lower link actuators by a fluid line, wherein the fluid line includes a fluid passage extending through the upper link support bracket.

Using a fluid passage extending through the upper link support bracket to define part of the fluid line between the working port of the lower link actuator control valve and the working chambers of the lower link actuators reduces the number of components required and simplifies integration of the fluid circuit in the vehicle. Furthermore, the upper link support brackets provides fixation of the fluid lines relative to the chassis.

At least part of the fluid passage may be integrally defined in the upper link support bracket. The link support bracket may be cast and at least part of the fluid passage may be cast in the fluid support bracket. In this case, parts of the fluid passage may be machine finished. Alternatively, the upper link support bracket may be machined to define the fluid passage.

The fluid passage may include a valve port and two actuator ports, the valve port fluidly connected with the at least one working port of the lower link actuator control valve and each actuator port fluidly connected with the at least one working chamber of a respective one of the lower link actuators. The fluid passage may have three fluidly interconnected branches, a first branch extending from the valve port, a second branch extending from one of the actuator ports, and a third branch extending from the other of the actuator ports. The fluid passage may be generally T shaped. The fluid passage may also be fluidly connected with a pressure sensor mounted to the upper link support bracket.

In an embodiment, the lower link actuators are double acting fluid actuators, each having two working chambers, a lift chamber and a down chamber, the lower link actuator control valve having a first working port fluidly connected with the lift chambers of the lower link actuators by a lift chamber fluid line and a second working port fluidly connected with the down chambers of the lower link actuators by a down chamber fluid line, wherein each of the lift chamber fluid line and the down chamber fluid line includes a respective fluid passage extending through the upper link support bracket.

The lift chamber fluid passage may comprise a lift valve port fluidly connected with the first working port of the lower link actuator control valve, a first lift chamber actuator port fluidly connected with the lift chamber of one of the lower link actuators, and a second lift chamber actuator port fluidly connected with the lift chamber of the other of the lower link actuators. The down chamber fluid passage may comprise a down valve port fluidly connected with the second working port of the lower link actuator control valve, a first down chamber actuator port fluidly connected with the down chamber of one of the lower link actuators, and a second down chamber actuator port fluidly connected with the down chamber of the other of the lower link actuators. In this embodiment, a pressure sensor may mounted to the upper link support bracket and fluidly connected with one of the lift chamber fluid passage and the down chamber fluid passage.

The mobile machine may be an agricultural vehicle and may be an agricultural tractor.

In an aspect of the invention, there is provided a mobile machine having a three-point hitch comprising a pair of lower links and an upper link, the upper link being pivotably mounted to an upper link support bracket, a respective lower link actuator operatively connected with each of the lower links for raising and lowering the lower links, each lower link actuator being a double acting fluid actuator having a lift chamber and a down chamber, a fluid system for actuating the lower link actuators, the fluid system comprising a lower link actuator control valve having a lift port fluidly connected with the lift chambers of the lower link actuators by a lift chamber fluid line and a down port fluidly connected with the down chambers of the lower link actuators by a down chamber fluid line, wherein at least one of the lift chamber fluid line and the down chamber fluid line includes a fluid passage extending through the upper link support bracket.

In an aspect of the invention, there is provided an upper link support bracket for use in a three-point hitch of a mobile machine according to either of the previous aspects, the upper link support bracket having at least one fluid passage extending therethrough. At least a part of the at least one fluid passage may be integrally defined in the upper link support bracket. The at least one fluid passage may comprise a valve port and two actuator ports, the valve port fluidly connectable with a working port of a lower link actuator control valve of the three-point hitch and each actuator port fluidly connectable with a working chamber of a respective one of two lower link actuators forming part of the three-point hitch. The fluid passage may have three fluidly interconnected branches, a first branch extending from the valve port, a second branch extending from one of the actuator ports, and a third branch extending from the other of the actuator ports. The fluid passage may be generally T shaped. The fluid passage may also be fluidly connected with further port for receiving a pressure sensor. The upper link support bracket may be cast and at least part of the fluid passage may be cast in the fluid support bracket. In this case, parts of the fluid passage may be machine finished. Alternatively, the upper link support bracket may be machined to define the fluid passage.

In an embodiment, the upper link support bracket is configured for use with a three-point hinge in which the lower link actuators are double acting fluid actuators, each lower link actuator having two working chambers, a lift chamber and a down chamber, the hitch actuator control valve having a first working port fluidly connected with the lift chambers of the lower link actuators by a lift chamber fluid line and second working port fluidly connected with the down chambers of the lower link actuators by a down chamber fluid line, wherein the upper link support bracket defines two fluid passages, a lift chamber fluid passage for forming part of the lift chamber fluid line of the three-point hitch and a down chamber fluid passage for forming part of the down chamber fluid line of the three-point hitch.

The lift chamber fluid passage may comprise a lift valve port fluidly connectable with the first working port of the lower link actuator control valve, a first lift chamber actuator port fluidly connectable with the lift chamber of one of the lower link actuators of the three-point hitch, and a second lift chamber actuator port fluidly connectable with the lift chamber of the other of the lower link actuators of the three-point hitch. The down chamber fluid passage may comprise a down valve port fluidly connectable with the second working port of the lower link actuator control valve of the three-point hitch, a first down chamber actuator port fluidly connectable with the down chamber of one of the lower link actuators of the three-point hitch, and a second down chamber actuator port fluidly connectable with the down chamber of the other of the lower link actuators of the three-point hitch. The upper link support bracket may have a pressure sensor port fluidly connected to one of the lift chamber fluid passage and the down chamber fluid passage.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
FIG. 1 is a simplified side elevation of a tractor having a three-point hitch according to the invention;
FIG. 2 is a perspective view from the rear and to one side of components of a rear axle and three-point hitch of the tractor of FIG. 1;
FIG. 3 is a schematic diagram showing part of a hydraulic circuit for controlling lower link actuators of the three-point hitch of FIG. 2;
FIG.4 is a perspective view from the rear and to one side of a number of the hydraulic components of the three-point hitch of FIG. 2 and the hydraulic circuit of FIG. 3, including an upper link support bracket which is shown in section to reveal internal details of a fluid passage defined in the upper support bracket and which forms part of a lift chamber fluid line of the fluid circuit of FIG. 3; and
FIG.5 is a view similar to that of FIG. 4 but with the upper link support bracket sectioned in a different plane to reveal internal details of a fluid passage defined in the upper support bracket which forms part of a down chamber fluid line of the fluid circuit of FIG. 3.

### DETAILED DESCRIPTION

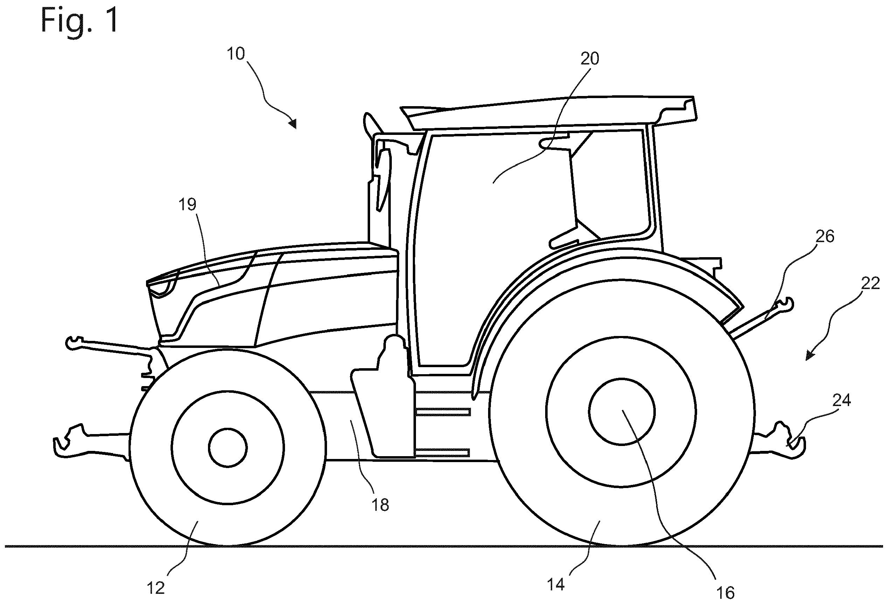

Referring to the drawings, FIG. 1 schematically illustrates mobile machine in the form of a tractor 10 (agricultural or industrial) having front wheels 12 mounted to a front axle and rear wheels 14 mounted to a rear transaxle 16. The tractor 10 has a chassis 18 which includes the transaxle 16. An engine compartment 19 houses an engine or other prime mover, such as an electric motor or a hybrid power unit. An operator cabin 20 is supported on the chassis 18 and provides an enclosed space for an operator of the tractor.

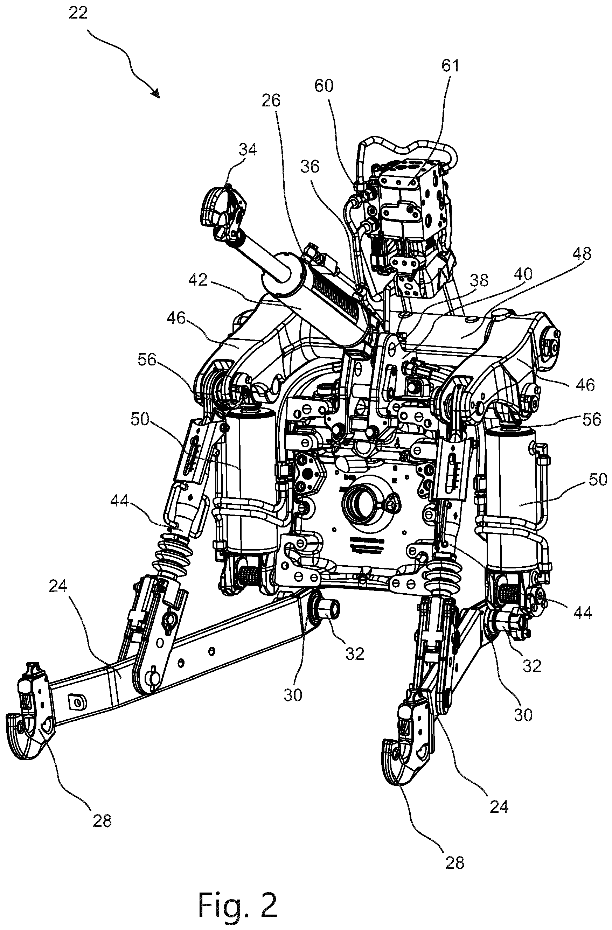

The tractor 10 has a rear three-point hitch 22 for attaching an implement to the tractor 10. In the case of an agricultural tractor, the implement may be an agricultural implement such as a plough, planter, trailer or the like. As illustrated in more detail in FIG. 2, the hitch 22 is mounted on the rear of the tractor chassis 18 in the vicinity of a housing of the rear transaxle 16. The three-point hitch 22 includes a pair of lower links 24 (only one of which is visible in FIG. 1) and an upper link 26.

Each lower link 24 comprises an elongate body and having a respective coupling hook 28, 30 at either end. The inner coupling hooks 30 engage respective transverse bars 32 attached to the chassis 18 and extending parallel to the axis of rotation of the rear axle, such that each of the lower links 24 is able to pivot about the axis of its respective bar 32 in a plane generally perpendicular to the axis of the rear axle to raise and lower the outer coupling hooks.

The upper link 26 comprises an elongate body of adjustable length with a respective coupling hook 34, 36 at either end. The inner coupling hook 36 engages a shaft 38 mounted to an upper link support bracket 40 which is mounted in fixed relation relative to the chassis 18. The upper link support bracket 40 may be mounted directly to the chassis or to some other structural component which is mounted directly or indirectly to the chassis. The shaft 38 extends parallel to the axis of rotation of the rear axle, such that the upper link 26 is able to pivot about the axis of the shaft 38 in a plane generally perpendicular to the axis of the rear axle. The upper link 26 is hydraulic, the elongate body of the upper link comprising a hydraulic cylinder 42 so that the length of the upper link 26 can be varied. The shaft 38 is mountable to the upper link support bracket 40 in a number of different locations. These features allow for adjustment of the hitch geometry.

A mechanism for raising and lowering the outer coupling hooks 28 of the lower links 24 includes a pair of lift rods 44, a pair of lift arms 46 and a pair of lower link actuators 50. Each of the lift rods 44 is pivotally connected at a lower end to a respective one of the lower links 24 and at an upper end to a respective lift arm 46. The lift arms 46 are mounted on the chassis 18 via a cross member 48. The lift arms 46 project rearward from the cross member 48 are rotated together with cross member 48 by the lower link actuators 50, each of which acts between one of the lift arms 46 and the tractor chassis 18 or some other structural member mounted in fixed relation relative to the chassis 18. The lift arms 26 and the cross member 48 may be formed integrally, such as by casting.

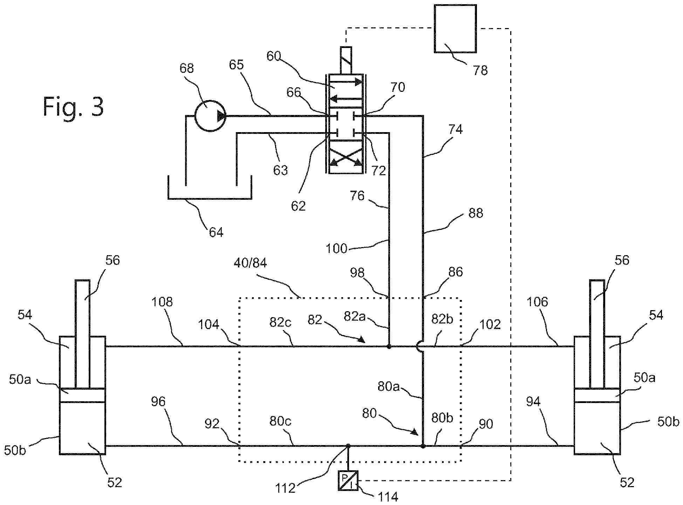

With reference to FIGs. 2 and 3, each lower link actuator 50 is in the form of a double acting fluid cylinder. A piston 50a is movably mounted in a cylinder 50b dividing it into two working chambers, a lift chamber 52 and a down chamber 54. The cylinder 50b is pivotably connected to the chassis 18 or another structural component fixed relative to the chassis 18. The piston 50a carries a piston rod 56 which projects beyond the cylinder and is pivotably connected to a respective one of the lift arms 46. When the fluid pressure in the lift chamber 52 exceeds that in the down chamber 54 by a sufficient amount, the actuator 50 extends rotating the lift arm 46 upwardly and raising the attached lower link 24. When the pressure in the down chamber 54 exceeds that in the lift chamber 52 by a sufficient amount, the actuator 50 retracts, rotating the lift arm 46 downwardly and lowering the attached lower link 24. However, the arrangement could be modified so that the cylinders 50b are connected with the lift arms 46 and the piston rods 56 connected to the chassis 18 and/or the arrangement could be modified so that extension of the actuators 50 is operative to lower the lower links 24 and retraction of the actuators 50 is operative to raise the lower links 24.

In the present embodiment, the lower link actuators 50 are hydraulic actuators operatively connected with a hydraulic system of the tractor and will be described as such. However, it should be appreciated that the lower link actuators 50 could be pneumatic actuators operatively connected with a pneumatic system on a tractor or other mobile machine in other embodiments.

The lower links 24 are raised or lowered in unison and actuation of the two lower link actuators 50 is controlled simultaneously through a single lower link actuator control valve 60. As illustrated schematically in FIG. 3, the lower link actuator control valve 60 has a tank port 62 fluidly connected via tank line 63 with a tank or reservoir 64 at atmospheric pressure and a pressure port 66 fluidly connected via pressure line 65 with a source of pressurised fluid 68. The source of pressurised fluid may be a pump 68 which draws fluid from the tank 64. Whilst a single tank 64 is shown in FIG. 3, there may be more than one tank.

The valve has two working ports, a first working port 70 and second working port 72. The first working port 70 is fluidly connected with the lift chambers 52 of both of the lower link actuators 50 by a lift chamber fluid line 74 and will be referred to as a lift port 70. The second working port 72 is fluidly connected with down chambers 54 of both of the lower link actuators 50 by a down chamber fluid line 76 and will be referred to as a down port 72. The lift chamber fluid line 74 and the down chamber fluid line 76 each have a T junction to enable the respective working port to be fluidly connected with chambers in both of the actuators 50. The lift chamber fluid line 74 and the down chamber fluid line 76 each comprise several hydraulic conduits connected via the T junctions as described in more detail below.

The lower link actuator control valve 60 is an electronically actuatable valve operative under control of an electronic control system 78 of the tractor to selectively connect one of the first and second working ports 70, 72 to the source of pressurised fluid 68 and the other to tank 64 to raise or lower the lower links 24. To raise the lower links 24, the lower link actuator control valve 60 connects the lift port 70 to the source of pressurised hydraulic fluid 68 and the down port 64 to tank 64. When the lower links 24 are to be lowered, the lower link actuator control valve 60 connects the lift port 70 to tank 64 and the down port 72 to the source of pressurised fluid 68. The lower link actuator control valve 60 may be a solenoid valve and may be a proportional valve to allow for more precise control in raising and lowering of the lower links 24. However, the lower link actuator control valve 60 can take any suitable form and be controlled in any suitable manner. The lower link actuator control valve 60 may be integrated into a common valve block (indicated in FIG. 2 with 61) with one or more valves for controlling further hydraulic actuators, such as a valve for controlling extension and retraction of the cylinder 42 of the hydraulic upper link 26.

In accordance with an aspect of the invention, at least one of the lift chamber fluid line 74 and the down chamber fluid line 76 includes a fluid passage 80, 82 which passes through the upper link support bracket 40. In an embodiment, each of the lift chamber fluid line 74 and the down chamber fluid line 76 includes a respective fluid passage 80, 82 which passes through the upper link support bracket 40.

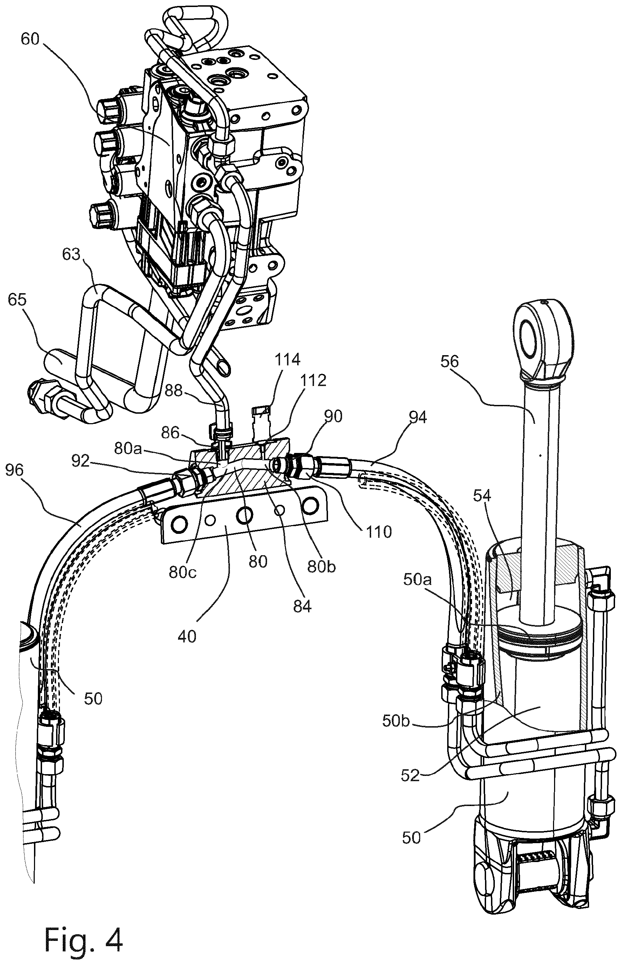

FIG. 4 illustrates a lift chamber fluid passage 80 which is defined in a body 84 of the upper link support bracket 40 indicated with dotted lines in FIG. 3. The lift chamber fluid passage 80 is generally T shaped having three branches that are fluidly interconnected. A first branch 80a extends from a lift valve port 86 at an upper surface of the body 84. The lift valve port 86 is fluidly connected with the lift port 70 of the lower link actuator control valve 60 though a hydraulic conduit 88 which may be a pipe or hose. A second branch 80b of the lift chamber fluid passage 80 extends from a first lift chamber actuator port 90 on one side of the body 84 and a third branch 80c of the lift chamber fluid passage 80 extends from a second lift chamber actuator port 92 on the opposite side of the body 84. Each of the lift chamber actuator ports 90, 92 are fluidly connected with the lift chamber 52 of a respective one of the lower link actuators 50 by a respective hydraulic conduit 94, 96 which may be a pipe or hose. The three branches 80a, 80b, 80c of the lift chamber passage 80 are fluidly interconnected so that fluid is able to flow between the lift valve port 86 and each of the lift chamber actuator ports 90, 92. The lift chamber fluid passage 80 defines the T junction in the lift chamber fluid line enabling a fluid connection with the lift port 70 of the lower link actuator control valve 60 to be split to the lift chambers 52 of both lower link actuators 50.

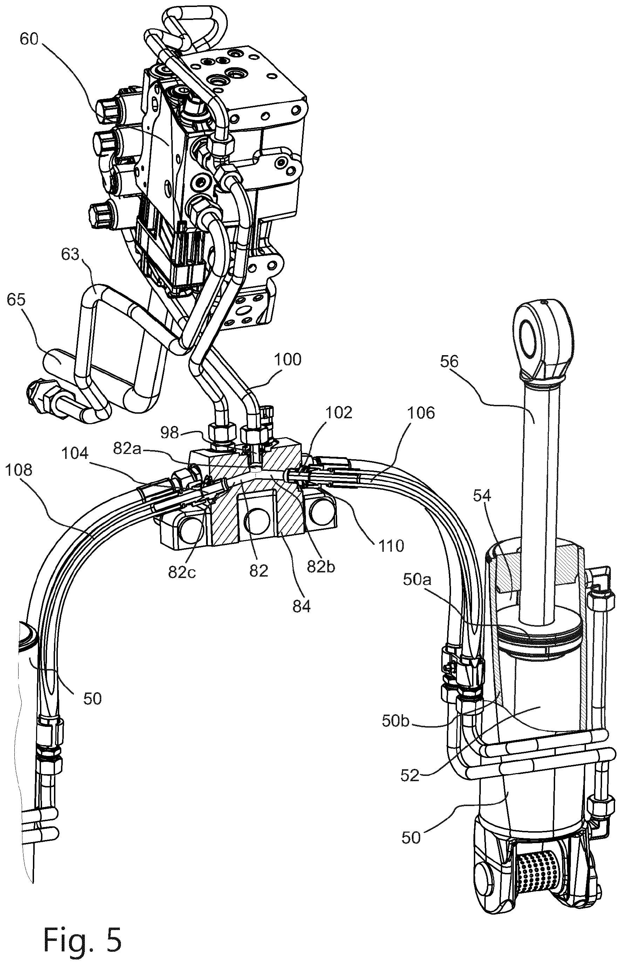

The down chamber fluid passage 82 is shown in FIG. 5 and is defined in the body 84 of the upper link support bracket 40 in a similar manner to the lift chamber fluid passage 80. Accordingly, the down chamber fluid passage 82 and has a first branch 82a which extends from a down valve port 98 at an upper surface of the body 84. The down chamber valve port 98 is fluidly connected with the down chamber port 72 of the lower link actuator control valve 60 though a hydraulic conduit 100 which may be a pipe or hose. A second branch 82b of the down chamber fluid passage 82 extends from a first down chamber actuator port 102 on one side of the body 84 and a third branch 82c of the down chamber fluid passage 82 extends from a second down chamber actuator port 104 on the opposite side of the body 84. Each of the down chamber actuator ports 102, 104 are fluidly connected with the down chamber 54 of a respective one of the lower link actuators 50 by a respective hydraulic conduit 106, 108 which may be a pipe or hose. The three branches the down chamber passage 82 are fluidly interconnected so that fluid is able to flow between the down valve port 98 and each of the down chamber actuator ports 102, 104. The down chamber fluid passage 82 defines a T junction enabling a fluid connection with the down chamber port 72 of the lower link actuator control valve 60 to be split to the down chambers 54 of both lower link actuators 50.

The ports 86, 90, 92, 98, 102, 104 may be internally threaded ports and the conduits 88, 94, 96, 102, 106, 108 may have externally threaded unions 110 for engagement in the ports in a known manner.

A pressure sensor port 112 is defined in an upper surface of the body 84 of the upper link support bracket 40 for receiving a pressure sensor 114. The pressure sensor port 112 is fluidly connected with the lift chamber fluid passage 80. The pressure sensor 114 is operatively connected with the electronic control system 78 and in use provides a signal indicative of the fluid pressure in the lift chamber fluid line 74 to the control system 78. In other embodiments, the pressure sensor port 112 may be fluidly connected with the down chamber fluid passage 82 or there may be two pressure sensor ports and pressure sensors, one for the lift chamber fluid passage 80 and one for the down chamber fluid passage 82.

The upper link support bracket 40 may be made from any suitable material using any suitable manufacturing techniques. In an embodiment, the upper link support bracket 40 is made from a metallic material. In an embodiment, the upper link support bracket 40 is cast in one or more parts. In this case, at least part of each of the lift chamber fluid passage 80 and the down chamber fluid passage 82 may be cast in the bracket 40. However, either fluid passage 80, 82 may be at least partly machine finished, say to form elements of the ports 86, 90, 92, 98, 102, 104 such as the internal threads. Alternatively, the whole of each of the lift chamber fluid passage 80 and the down chamber fluid passage 82 may be machined into the bracket 40 and the bracket may be a fully machined component.

The lift chamber fluid passage 80 and the down chamber fluid passage 82 both functionally define T junctions enabling a fluid connection between the respective working port 70, 72 and the corresponding chambers 52, 54 in the two hitch actuators 50. This avoids the need for separate T couplings to be provided, reducing the overall number of components required and making installation quicker and easier, eliminating the need to secure separate T couplings in position. Since the fluid conduits 88, 94, 96, 100, 106, 108 extending between the upper link support bracket 40 and the lower link actuators 50 or between the upper link support bracket 40 and the lower link actuator valve 60 are all effectively secured to the chassis by connection with the upper link support bracket 40, no additional clamps or clips are required to secure these hydraulic conduits adjacent the T junctions.

Whilst the lift chamber fluid passage 80 and the down chamber fluid passage 82 function as T junctions, it will be appreciated that they need not be T shaped as such. Accordingly, the shape of the lift chamber fluid passage 80 and/or the down chamber fluid passage 82 can vary from that shown provided that each passage allows for fluid connection between the valve port 86, 98 and the two actuator chamber ports 90, 92, 102, 104. The location of the ports 86, 90, 92, 98, 102, 104 can also be varied depending on requirements for positioning the conduits 88, 94, 96, 102, 106, 108 for connection to the lower link actuator control valve 60 and the lower link actuators 50.

Whilst in the illustrated embodiment both the lift chamber fluid line 74 and the down chamber fluid line 76 include a fluid passage 80, 82 passing through the upper link support bracket 40, in other embodiments only one of the lift chamber fluid line 74 and the down chamber fluid line 76 include a fluid passage 80, 82 passing through the upper link support bracket 40. This can also help to reduce the number of components required and make installation easier.

In the above embodiment, the lower link actuators 50 are double acting having two working chambers 52, 54. In an alternative embodiment, the lower link actuators 50 may be single acting, each having only one working chamber which may be a lift chamber or a down chamber. In this case, the lower link actuator valve 60 may have a single working port connected through a fluid line with the working chambers of the two actuators. In such an embodiment, a single fluid passage forming part of the fluid line can be defined in the upper link support bracket in accordance with the invention. The single fluid passage may take a form similar to the fluid passage 80 illustrated in FIG. 4 and may define a T junction to split the connection to the working port to the working chamber of both actuators.

## Claims

1. A mobile machine (10) having a three-point hitch (22) comprising a pair of lower links (24) and an upper link (26), the upper link being pivotably mounted to an upper link support bracket (40), a respective lower link actuator (50) operatively connected with each of the lower links for raising and lowering the lower links, each lower link actuator comprising a fluid actuator having at least one working chamber (52, 54), a fluid system for actuating the lower link actuators, the fluid system comprising a lower link actuator control valve (60) having at least one working port (70, 72) fluidly connected with the at least one working chamber (52, 54) of each of the lower link actuators by a fluid line (74, 76), **characterized in that** the fluid line includes a fluid passage (80, 82) extending through the upper link support bracket.

2. A mobile machine (10) according to claim 1, wherein at least part of the fluid passage (80, 82) is integrally defined in the upper link support bracket (40).

3. A mobile machine (10) according to claim 1 or claim 2, wherein the fluid passage (80, 82) includes a valve port (86, 98) and two actuator ports (90, 92, 102, 104), the valve port fluidly connected with the at least one working port (70, 72) of the lower link actuator control valve (60) and each actuator port fluidly connected with the at least one working chamber (52, 54) of a respective one of the lower link actuators (50).

4. A mobile machine (10) according to claim 3, wherein the fluid passage (80, 82) has three fluidly interconnected branches, a first branch (80a, 82a) extending from the valve port (86, 98), a second branch (80b, 82b) extending from one of the actuator ports (90, 102), and a third branch (80c, 82c) extending from the other of the actuator ports (92, 104).

5. A mobile machine (10) according to any one of claims 1 to 4, wherein the fluid passage (80, 82) is fluidly connected with a pressure sensor (114) mounted to the upper link support bracket (40).

6. A mobile machine (10) as according to any one of claims 1 to 5, wherein the lower link actuators (50) are double acting fluid actuators each having two working chambers (52, 54), a lift chamber (52) and a down chamber (54), the hitch actuator control valve (60) having a first working port (70) fluidly connected with the lift chambers (52) of the lower link actuators by a lift chamber fluid line (74) and second working port (72) fluidly connected with the down chambers (54) of the lower link actuators by a down chamber fluid line (76), wherein each of the lift chamber fluid line and the down chamber fluid line includes a respective fluid passage (80, 82) extending through the upper link support bracket (40).

7. A mobile machine (10) according to claim 6, wherein the lift chamber fluid passage (80) comprises a lift valve port (86) fluidly connected with the first working port (70) of the lower link actuator control valve (60), a first lift chamber actuator port (90) fluidly connected with the lift chamber (52) of one of the lower link actuators (50) and a second lift chamber actuator port (92) fluidly connected with the lift chamber (52) of the other of the lower link actuators (50), and the down chamber fluid passage (82) comprises a down valve port (98) fluidly connected with the second working port (72) of the lower link actuator control valve, a first down chamber actuator port (102) fluidly connected with the down chamber (54) of one of the lower link actuators, and a second down chamber actuator port (104) fluidly connected with the down chamber (54) of the other of the lower link actuators.

8. A mobile machine (10) according to claim 7, wherein a pressure sensor (114) is mounted to the upper link support bracket (40) and fluidly connected with one of the lift chamber fluid passage (80) and the down chamber fluid passage (82).

9. An upper link support bracket (40) for use in a three-point hitch (22) of a mobile machine according to any one of claims 1 to 8, the upper link support bracket defining at least one fluid passage (80, 82).

10. An upper link support bracket (40) according to claim 10, wherein at least part of the fluid passage (80, 82) is integrally defined in the upper link support bracket.

11. An upper link support bracket (40) according to claim 9 or claim 10, wherein the at least one fluid passage (80, 82) includes a valve port (86, 98) and two actuator ports (90, 92, 102, 104), the valve port fluidly connectable with a working port (70, 72) of a lower link actuator control valve of the three-point hitch (22) and each actuator port fluidly connectable with a working chamber (52, 54) of a respective one of two lower link actuators (50) forming part of the three-point hitch.

12. An upper link support bracket (40) according to any one of claims 9 to 11, wherein the upper link support bracket is configured for use with a three-point hitch (22) in which the lower link actuators (50) are double acting fluid actuators, each having a lift chamber (52) and a down chamber (54), the lower link actuator control valve (60) having a first working port (70) fluidly connected with the lift chambers of the lower link actuators by a lift chamber fluid line (74) and second working port fluidly connected with the down chambers of the lower link actuators by a down chamber fluid line (76), wherein the upper link support bracket defines two fluid passages (80, 82), a lift chamber fluid passage (80) for forming part of the lift chamber fluid line of the three-point hitch and a down chamber fluid passage (82) for forming part of the down chamber fluid line of the three-point hitch.

13. An upper link support bracket (40) according to claim 12, wherein the lift chamber fluid passage (80) comprises a lift valve port (86) fluidly connectable with the first working port (70) of the lower link actuator control valve (60), a first lift chamber actuator port (90) fluidly connectable with the lift chamber (52) of one of the lower link actuators (50) of the three-point hitch (22), and a second lift chamber actuator port (92) fluidly connectable with the lift chamber (52) of the other of the lower link actuators (50) of the three-point hitch, and the down chamber fluid passage comprises a down valve port (98) fluidly connectable with the second working port (72) of the lower link actuator control valve of the three-point hitch, a first down chamber actuator port (102) fluidly connectable with the down chamber (54) of one of the lower link actuators (50) of the three-point hitch, and a second down chamber actuator port (104) fluidly connectable with the down chamber (54) of the other of the lower link actuators (50) of the three-point hitch.

14. An upper link support bracket (40) according to claim 12, wherein the upper link support bracket has a pressure sensor port (112) fluidly connected to one of the lift chamber fluid passage (80) and the down chamber fluid passage (82).
